# EUROPÄISCHE PATENTSCHRIFT

(11) **EP 3 064 101 B1**
(45) Veröffentlichungstag und Bekanntmachung des Hinweises auf die Patenterteilung: **05.08.2020**
(21) Anmeldenummer: 16154235.2
(22) Anmeldetag: 04.02.2016
(51) Int. Cl.: A47J 31/44

(54) **KAFFEEAUTOMAT MIT ABNEHMBAREM WASSERTANK**
AUTOMATIC COFFEE MACHINE WITH REMOVABLE WATER TANK
MACHINE A CAFE COMPRENANT UN RESERVOIR D'EAU AMOVIBLE

(30) Priorität: 03.03.2015 DE 102015203739
(43) Veröffentlichungstag der Anmeldung: 07.09.2016
(73) Patentinhaber: BSH Hausgeräte GmbH, 81739 München (DE)
(72) Erfinder: Zibret, Igor, 3327 Smartno ob Paki (SI); Ursej, Matjaz, 2382 Mislinja (SI); Kozelj, Evgen, 3327 Smartno ob Paki (SI)

(56) Entgegenhaltungen:
- EP-A1- 2 792 282

## Beschreibung

Die vorliegende Erfindung betrifft einen Kaffeeautomaten mit einem abnehmbaren Wassertank gemäß dem Oberbegriff des Anspruchs 1. Die Erfindung betrifft außerdem einen Wassertank für einen solchen Kaffeeautomaten.

Übliche Kaffeeautomaten besitzen einen abnehmbaren Wassertank, der zum Befüllen beispielsweise unter einen Wasserhahn gestellt werden kann. Um fluidübertragend mit dem Kaffeeautomaten verbunden zu werden, wird dieser üblicherweise vertikal in den Kaffeeautomaten eingesetzt und über einen bodenseitigen Auslass mit einem kaffeeautomatenseitigen Einlass verbunden. Dies bedingt jedoch immer, dass oberhalb des Kaffeeautomaten genügend Platz vorhanden ist, um den Wassertank senkrecht nach oben ziehen und damit aus dem Kaffeeautomaten lösen zu können. Eine Positionierung des Kaffeeautomaten in einer normalen Küche, beispielsweise unterhalb eines Oberschranks ist daher unter Umständen problematisch. Aus der EP 2 792 282 A1 ist zudem ein Kaffeeautomat mit einem nach hinten ausschwenkbaren Tank bekannt, bei dem eine Hälfte eines Scharniergelenks im Tank und eine andere Hälfte des Scharniergelenks als Drehbolzen in einem Gehäuse angeordnet ist.

Die vorliegende Erfindung beschäftigt sich daher mit dem Problem, für einen Kaffeeautomaten der gattungsgemäßen Art eine verbesserte oder zumindest eine alternative Ausführungsform anzugeben, die sich insbesondere durch eine veränderte aber zugleich auch zuverlässige Montage bzw. Demontage eines Wassertanks auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, an einem Kaffeeautomaten einen abnehmbaren Wassertank vorzusehen, der jedoch nicht ausschließlich vertikal von oben in den Kaffeeautomaten einsetzbar, bzw. in der gleichen Weise aus diesem entnehmbar ist, sondern vielmehr seitlich über eine Drehbewegung in den Kaffeeautomaten eingesetzt werden kann. Der Wassertank wird somit zunächst seitlich in einer geneigten Entnahmestellung in den Kaffeeautomaten eingesetzt und zur vollständigen Montage um die Halte-/Scharnierkontur gedreht, bis der Wassertank seine im Wesentlichen aufrechte Betriebsstellung einnimmt. Sowohl in der Betriebsstellung als auch in der geneigten Entnahmestellung ist dabei der Wassertank zuverlässig und sicher über eine Halte-/Scharnierkontur am Kaffeeautomaten gehalten. Die Halte-/Scharnierkontur ist dabei am Kaffeeautomaten angeordnet und wirkt mit einer am Wassertank angeordneten Gegenkontur derart zusammen, dass der Wassertank in seiner geneigten Entnahmestellung auf die Halte-/Scharnierkontur aufsetzbar bzw. von dieser entnehmbar und um diese Halte-/Scharnierkontur in seine aufrechte Betriebsstellung verdrehbar ist. Der Wassertank ist dabei aufgrund der erfindungsgemäßen Ausbildung der Halte-/Scharnierkontur und der am Wassertank angeordneten Gegenkontur sowohl in seiner geneigten Entnahmestellung als auch in seiner aufrechten Betriebsstellung zuverlässig am Kaffeeautomaten gehalten und dadurch nie gefährdet, beispielsweise in unerwünschter Weise seitlich aus dem Kaffeeautomaten herauszufallen. Gleichzeitig wirkt aufgrund des Gewichts des Wassertanks und des darin enthaltenen Wassers nur ein so großes Moment auf den Wassertank ein, dass dieser sowohl in seiner Betriebsstellung als auch in seiner Entnahmestellung zuverlässig gehalten wird. Mit dem erfindungsgemäßen Kaffeeautomaten ist es somit möglich, einen Kaffeeautomaten mit einem seitlich entnehmbaren Wassertank zu schaffen, der insbesondere oberhalb des Kaffeeautomaten einen deutlich geringeren Platzbedarf erfordert, da die Entnahme des Wassertanks seitlich und nicht nach oben erfolgt.

Erfindungsgemäß ist die Halte-/Scharnierkontur als Rippe und die Gegenkontur am Wassertank als Nut ausgebildet. Sowohl die Halte-/Scharnierkontur als auch die Gegenkontur können dabei über entsprechende Konturen vergleichsweise kostengünstig und dennoch hochpräzise als Kunststoffspritzgussteil hergestellt werden, wobei selbstverständlich auch denkbar ist, dass insbesondere in der Halte-/Scharnierkontur eine metallische Bewehrung vorgesehen ist, welche die Kunststoffrippe versteift.
Erfindungsgemäß ist die Halte-/Scharnierkontur um 5° bis 15°, insbesondere um ca. 10°, gegenüber einer Lotrechten geneigt. Die geneigte Halte-/Scharnierkontur ermöglicht aufgrund ihrer geneigten, rippenartigen Ausbildung einerseits ein bequemes einsetzen bzw. entnehmen des Wassertanks und andererseits zugleich ein zuverlässiges Halten des Wassertanks in seiner Entnahmestellung. Durch die schräge Anordnung kann sogar eine Einführhilfe geschaffen werden, welches das Platzieren des Wassertanks erleichtert. Erfindungsgemäß ist die Nut am Wassertank durch eine außenliegende Wand, insbesondere in der Art einer Blende, und durch innenliegende Rippen gebildet. Der Wassertank kann dabei einstückig mit den Rippen und oder der außenliegenden Wand ausgebildet sein, wobei es selbstverständlich alternativ auch vorstellbar ist, dass die außenliegende Wand in der Art einer Blende ausgebildet und am Wassertank entsprechend befestigt ist. Vorzugsweise sind jedoch zumindest die innenliegenden Rippen einstückig mit dem Wassertank ausgebildet, so dass diese zusammen mit dem Wassertank in einem Kunststoffspritzgießvorgang hergestellt werden können.

Die vorliegende Erfindung beruht weiter auf dem allgemeinen Gedanken, einen Wassertank bereitzustellen mit einer bodenseitigen Nut, welche durch eine außenliegende Wand des Wassertanks und weiter innen angeordnete, das heißt innenliegende Rippen gebildet ist. Die Nut ist dabei selbstverständlich auf die am Kaffeeautomaten angeordnete Halte-/Scharnierkontur abgestimmt und bezüglich dieser derart ausgerichtet, dass ein auf die Halte-/Scharnierkontur aufgesetzter Wassertank sowohl in seiner geneigten Entnahmestellung als auch in seiner aufrechten Betriebsstellung zuverlässig gehalten ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Kaffeeautomaten im Bereich eines Wassertanks mit sich in seiner Betriebsstellung befindlichem Wassertank,
- Fig. 2: eine Darstellung wie in Fig. 1, jedoch bei sich in seiner Entnahmestellung befindlichen Wassertank,
- Fig. 3: den erfindungsgemäßen Kaffeeautomaten ohne Wassertank,
- Fig. 4: eine Ansicht von unten auf den erfindungsgemäßen Wassertank.

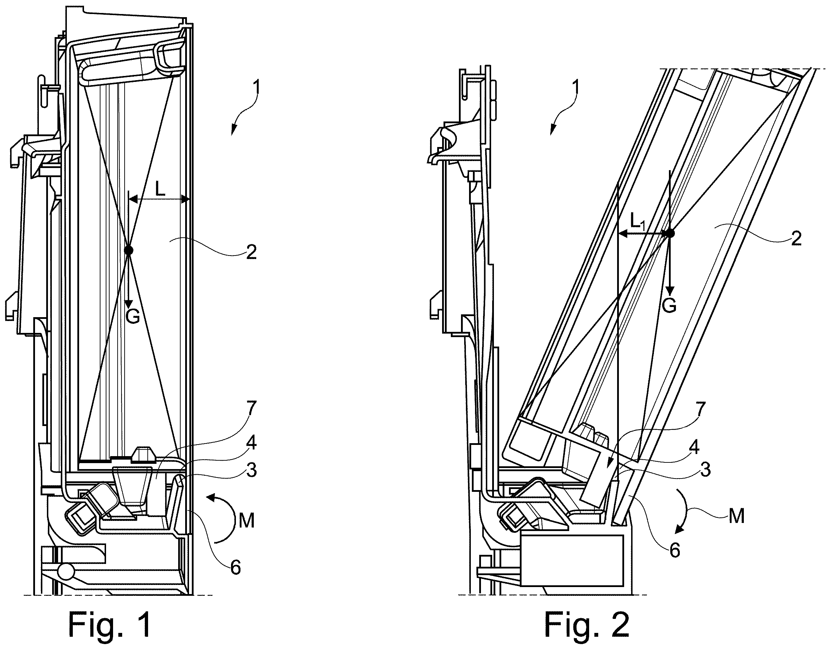

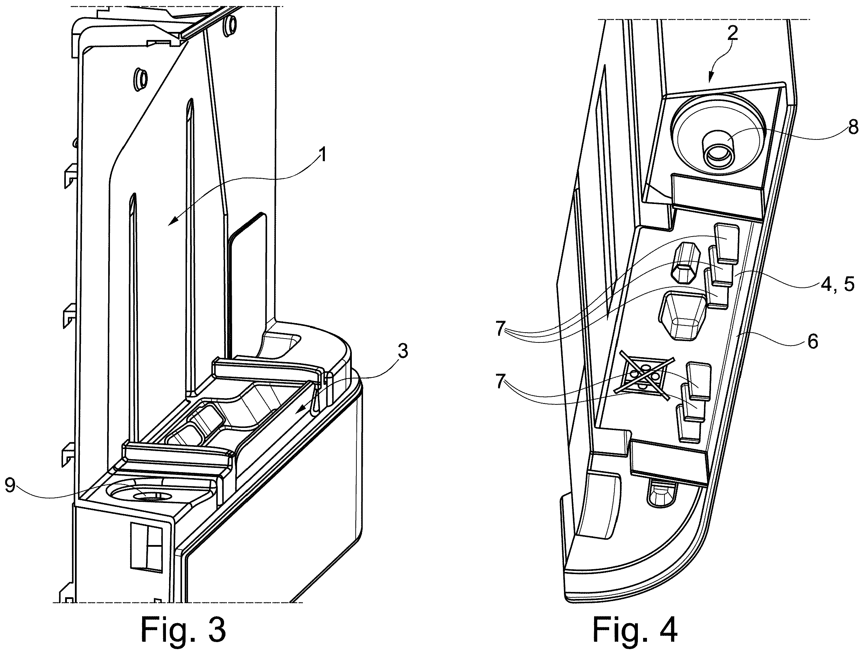

Entsprechend den Fig. 1 bis 3, weist ein erfindungsgemäßer Kaffeeautomat 1 einen abnehmbaren Wassertank 2 auf, wobei am Kaffeeautomaten 1 eine Halte-/Scharnierkontur 3 (vgl. insbesondere die Fig. 3) angeordnet ist, die mit einer Gegenkontur 4 am Wassertank 2 derart zusammenwirkt, dass der Wassertank 2 in seiner geneigten Entnahmestellung (vgl. Fig. 2) auf die Halte-/Scharnierkontur 3 aufsetzbar und um diese in eine aufrechte Betriebsstellung (vgl. Fig. 1) verdrehbar ist. Dabei sind die Halte-/Scharnierkontur 3 und die Gegenkontur 4 zudem derart ausgebildet, dass der Wassertank 2 sowohl in seiner geneigten Entnahmestellung (vgl. Fig. 2) als auch in seiner aufrechten Betriebsstellung (vgl. Fig. 1) zuverlässig am Kaffeeautomaten 1 gehalten ist.

Gemäß der Fig. 1 bewirkt der Wassertank 2 mit seiner Gewichtskraft G und seinem Hebelarm L zur Drehachse der Halte-/Scharnierkontur 3 ein Moment M, welches ihn zuverlässig in seiner Betriebsstellung hält. Gemäß der Fig. 2 wirkt ein entgegengesetztes Moment M aufgrund der über den Hebelarm L₁ auf die Scharnierkontur 3 eingebrachten Gewichtskraft G des Wassertanks 2. Diese Moment M wird über eine entgegengesetztes gerichtetes Moment kompensiert, welches von der Halte-/Scharnierkontur 3 auf den Wassertank 2 ausgeübt wird, so dass der Wassertank 2 auch in seiner Entnahmestellung (vgl. Fig. 2) zuverlässig am Kaffeeautomaten 1 gehalten ist.

Die Halte-/Scharnierkontur 3 ist dabei als Rippe ausgebildet (vgl. Fig. 3), während die Gegenkontur 4 als Nut 5 ausgebildet ist, wie dies insbesondere gemäß den Fig. 1, 2 und 4 zu erkennen ist. Über die Halte-/Scharnierkontur 3 ist es möglich, den Wassertank 2 seitlich in den Kaffeeautomaten 1 einzusetzen, wodurch insbesondere ein bisher oberhalb des Kaffeeautomaten freizuhaltender Raumbedarf nunmehr anderweitig belegt werden kann.

Die Halte-/Scharnierkontur 3 ist dabei als Rippe ausgebildet, die um einen Winkel α zwischen 5° und 15°, insbesondere um ca. 10°, gegenüber der Vertikalen geneigt ist. Durch diese spezielle Neigung ist es einerseits möglich, den Wassertank 2 einfach und problemlos in den Kaffeeautomaten 1 einzusetzen und es wird andererseits sichergestellt, dass der Wassertank 2 auch in seiner Entnahmestellung zuverlässig gehalten ist.

Die Nut 5 ist dabei am Wassertank 2 durch eine außenliegende Wand 6 sowie durch innenliegende Rippen 7 (vgl. insbesondere die Fig. 4) gebildet, wobei insgesamt sechs Rippen 7 vorgesehen sind. Der Wassertank 2 und insbesondere ein Boden desselben mit der Nut 5 sind dabei aus Kunststoff, insbesondere als Kunststoffspritzgussteil, ausgebildet, was die Herstellung sowohl kostengünstig als auch qualitativ hochwertig ermöglicht. Über einen bodenseitigen Auslauf 8 (vgl. die Fig. 4) kann Wasser aus dem sich in seiner Betriebsstellung befindlichen Wassertank 2 über einen entsprechenden Einlass 9 in den Kaffeeautomaten 1 geleitet werden.

Mit dem erfindungsgemäßen Kaffeeautomaten 1 und dem erfindungsgemäß ausgebildeten Wassertank 2 ist es erstmals möglich einen seitlich am Kaffeeautomaten 1 einzusetzenden Wassertank 2 vorzusehen, welcher aufgrund der speziellen Geometrie der Halte-/Scharnierkontur 3 und der damit zusammenwirkenden Gegenkontur 4 sowohl in seiner Betriebsstellung als auch in seiner Entnahmestellung zuverlässig am Kaffeeautomaten 1 gehalten ist.

### Bezugszeichenliste

- 1: Kaffeeautomat
- 2: Wassertank
- 3: Halte-/Scharnierkontur
- 4: Gegenkontur
- 5: Nut
- 6: Wand
- 7: Rippen
- 8: Auslass
- 9: Einlass

## Patentansprüche

1. Kaffeeautomat (1) mit einem abnehmbaren Wassertank (2), wobei der Kaffeeautomat (2) eine Halte-/Scharnierkontur (3) aufweist, die mit einer Gegenkontur (4) am Wassertank (2) derart zusammen wirkt, dass der Wassertank (2) in einer geneigter Entnahmestellung auf die Halte-/Scharnierkontur (3) aufsetzbar und um diese in eine aufrechte Betriebsstellung verdrehbar ist, wobei die Halte-/Scharnierkontur (3) und die Gegenkontur (4) derart ausgebildet sind, dass der Wassertank (2) sowohl in seiner geneigten Entnahmestellung als auch in seiner aufrechten Betriebsstellung zuverlässig am Kaffeeautomaten (1) gehalten ist, und wobei die Halte-/Scharnierkontur (3) als Rippe und die Gegenkontur (4) als Nut (5) ausgebildet sind, **dadurch gekennzeichnet, dass** die Nut (5) am Wassertank (2) durch eine außenliegende Wand (6) und durch innenliegende Rippen (7) gebildet ist, und dass die am Kaffeeautomat (2) als Rippe ausgebildete Halte-/Scharnierkontur (3) um einen Winkel α von 5° bis 15°, insbesondere um 10°, gegenüber der Lotrechten geneigt ist.

2. Kaffeeautomat nach Anspruch 1, **dadurch gekennzeichnet, dass** der Wassertank (2) seitlich in den Kaffeeautomaten (1) einsetzbar ist.

3. Kaffeeautomat nach einem der Ansprüche 1 bis 2, **dadurch gekennzeichnet, dass** der Wassertank (2) und insbesondere ein Boden desselben mit der Nut (2) aus Kunststoff, insbesondere als Kunststoffspritzgussteil, ausgebildet ist.

4. Kaffeeautomat nach Anspruch 1 oder 3, **dadurch gekennzeichnet, dass** am Wassertank (2) insgesamt sechs Rippen (7) vorgesehen sind.

## Claims

1. Automatic coffee maker (1) with a detachable water tank (2), wherein the automatic coffee maker (2) has a holding/hinge contour (3), which interacts with a counter contour (4) on the water tank (2) so that the water tank (2) can be placed on the holding/hinge coutour (3) in an inclined removal position and can be rotated about this in an upright operating position, wherein the holding/hinge contour (3) and the counter contour (4) are embodied so that the water tank (2) is reliably held on the automatic coffee maker (1) both in its inclined removal position and also in its upright operating position and wherein the holding/hinge contour (3) and the counter contour (4) are embodied as a fin and as a groove (5) in each instance, **characterised in that** the groove (5) on the water tank (2) is formed by an externally lying wall (6) and by internally lying fins (7), and that the holding/hinge contour (3) embodied as a fin on the automatic coffee maker (2) is inclined about an angle α of 5° to 15°, in particular about 10°, compared to the perpendicular.

2. Automatic coffee maker according to claim 1, **characterised in that** the water tank (2) can be inserted laterally into the automatic coffee maker (1).

3. Automatic coffee maker according to one of claims 1 to 2, **characterised in that** the water tank (2) and in particular a base of the same is embodied with the groove (2) made from plastic, in particular as a plastic injection moulded part.

4. Automatic coffee maker according to claim 1 or 3, **characterised in that** overall six fins (7) are provided on the water tank (2).

## Revendications

1. Machine à café (1) comprenant un réservoir d'eau amovible (2), dans laquelle la machine à café (2) comprend un contour de maintien / charnière (3) qui interagit avec un contre-contour (4) sur le réservoir d'eau (2) de telle manière que le réservoir d'eau (2) peut être placé dans une position d'extraction inclinée sur le contour de maintien / charnière (3) et peut pivoter autour de celui-ci jusque dans une position de fonctionnement droite, dans laquelle le contour de maintien / charnière (3) et le contre-contour (4) sont configurés de telle manière que le réservoir d'eau (2) est maintenu de façon fiable sur la machine à café (1) aussi bien dans sa position d'extraction inclinée que dans sa position de fonctionnement droite, et dans laquelle le contour de maintien / charnière (3) est configuré sous forme d'une nervure et le contre-contour (4) est configuré sous forme d'une encoche (5),
**caractérisée en ce que** l'encoche (5) sur le réservoir d'eau (2) est formée par une paroi extérieure (6) et par des nervures intérieures (7), et **en ce que** le contour de maintien / charnière (3) configuré sous forme de nervure sur la machine à café (2) est incliné d'un angle α de 5° à 15°, notamment de 10° par rapport à la verticale.

2. Machine à café selon la revendication 1, **caractérisée en ce que** le réservoir d'eau (2) peut être inséré latéralement dans la machine à café (1).

3. Machine à café selon l'une des revendications 1 ou 2, **caractérisée en ce que** le réservoir d'eau (2) et notamment un fond de celui-ci doté de l'encoche (2) est réalisé en une matière plastique, notamment sous forme d'une pièce moulée par injection de matière plastique.

4. Machine à café selon la revendication 1 ou 3, **caractérisée en ce que** six nervures (7) en tout sont agencées sur le réservoir d'eau (2).
